# EUROPEAN PATENT SPECIFICATION

(11) **EP 0 875 157 B1**
(45) Date of publication and mention of the grant of the patent: **25.07.2001**
(21) Application number: 98201226.2
(22) Date of filing: 16.04.1998
(51) Int. Cl.: A23N 7/02

(54) **Arrangement for the industrial peeling of patatoes and similar produce.**
Einrichtung zum industriellen Schälen von Kartoffeln und ähnlichen Produkten
Dispositif pour l'épluchage industriel de pommes de terre et produits similaires

(30) Priority: 21.04.1997 NL 1005857
(43) Date of publication of application: 04.11.1998
(73) Proprietor: Martin Scholten Productions, 6043 WG Roermond (NL)
(72) Inventor: Scholten, Martin, NL-6043 WG Roermond (NL)
(74) Representative: Smeets, Eugenius Theodorus J. M.

(56) References cited:
- EP-A- 0 648 432
- WO-A-95/30343

## Description

The invention relates to an arrangement for the industrial peeling of potatoes and similar produce.

Arrangements for the industrial peeling of potatoes and similar produce, further to be denoted potato peeling arrangements, are known to occur in many variants. Generally, this refers to arrangements which remove the peel of potatoes by utilizing peeling machines, scraping machines, grinding arrangements and the like while applying large amounts of water. The peels then obtained as well as the further rests are ground and together with the water discharged as a slushy effluent. This slushy effluent or pulp to be discharged may form serious pollution. In view of environmental management it is therefore necessary to have this pulp subjected to a costly purification process. Since there is substantially no use for the fixed substance, it is discharged as waste. Furthermore, with these known processes there is a large loss of potato volume, which loss may rise to over 50% which strongly increases costs.

In addition to the "wet" processes there are also processes for the dry peeling of potatoes and similar produce. From an environmental point of view, these processes which are carried out completely without any water are to be preferred to the wet processes. Besides, the peeled fixed substance may be used directly as cattle fodder.
Such a dry peeling process is known, for example, from published patent. application WO 95/30343. According to this application a potato is punched at its largest circumference by an oval, can-shaped blade so that an oval de-skinned side surface is obtained. This side surface forms a reference plane for further peeling operations; the potato held in the can-shaped punching blade can be partly displaced from the can-shaped blade and be subjected to further cutting operations in a great number of steps.

The known arrangement, however, is liable to distinct improvements. For example, the loss of peeled potato volume is still relatively large, it may still be 35 to 45%. The can-shaped punching blade for that matter is to cut a rather large side portion off the potato to obtain a good grip of the potato for the purpose of further peeling operations. Furthermore, a can-shaped punching blade is costly, especially an oval blade, whilst a great many blades are necessary in an industrial process, that is to say, at least 50 to 60 blades for continuous operation. In addition, potatoes of different size groups also require punching blades of different size groups. Besides, it has turned out that the dry peeling process may show a considerable further disadvantage. During the various processing steps, substances, more particularly, inter alia, potato starch, are secreted from potatoes, as a result of which the component parts of the peeling arrangement are rapidly contaminated considerably. Not only is cleaning the peeling arrangement in its successive stages a must for the proper operation, but also measures are necessary for avoiding the formation of bacteria as a result of the contamination.

It is an object of the invention to provide an arrangement that offers a solution to the disadvantages stated above of state of the art arrangements.
An arrangement for peeling potatoes and similar produce, comprising at least a holding member for a potato, at least a pushing member for pushing the potato into the holding member and cutting members for removing the skin from the various parts of the potato in a plurality of processing stations is characterized according to the invention in that the holding member comprises a carrier plate in an opening of which at least two holder blades for a potato are positioned in distributed fashion, the holding surface being positioned substantially perpendicularly to the surface of the carrier plate, at least at one of the processing stations a liquid spray or liquid atomizer being present with which the potato or parts of the processing stations respectively, may be moistened.

As a result of the design of the holding member of the arrangement according to the invention the loss of peeled substance may be distinctly reduced, the manufacturing cost of these holding members is considerably lower than that of can-shaped punching blades and the possibility is created to utilize cutting elements of the same type in the different processing stations. The liquid sprays or atomizers respectively, provide the possibility of cleaning the arrangement in simple fashion while the arrangement is in operation and prevent the formation of bacteria; they also provide the possibility of realising a substantially odourless process. The process according to the invention which utilises not only an advantageously shaped holding member but also a quantity of liquid that can be dosed prevents the disadvantages of both wet and dry peeling processes according to the state of the art.

In an extremely advantageous embodiment according to the invention the holder blades extend from the outer edge of the opening towards the centre of the opening. The holder blades then preferably have serrations in the holding surface positioned perpendicularly to the carrier plate. The construction of the holding member is simple and provides a strong grip of the potato.

The invention likewise relates to a holding member to be utilized in an industrial peeling arrangement for potatoes and similar produce.

These and other embodiments will become apparent from the annexed description given with reference to the drawing in which:
- Fig. 1: shows a top plan view of an embodiment of a holding member with knife-shaped holder blades according to the invention,
- Fig. 2: shows an elevation of the Holding member shown in Fig. 1,
- Fig. 3: shows a detail along lines A-A in Fig. 1,
- Figs. 4-17: give a diagrammatic representation of steps during potato peeling by the arrangement according to the invention,
- Fig. 18: gives a diagrammatic representation of one of the peeling blades, preferably applied to the arrangement according to the invention.

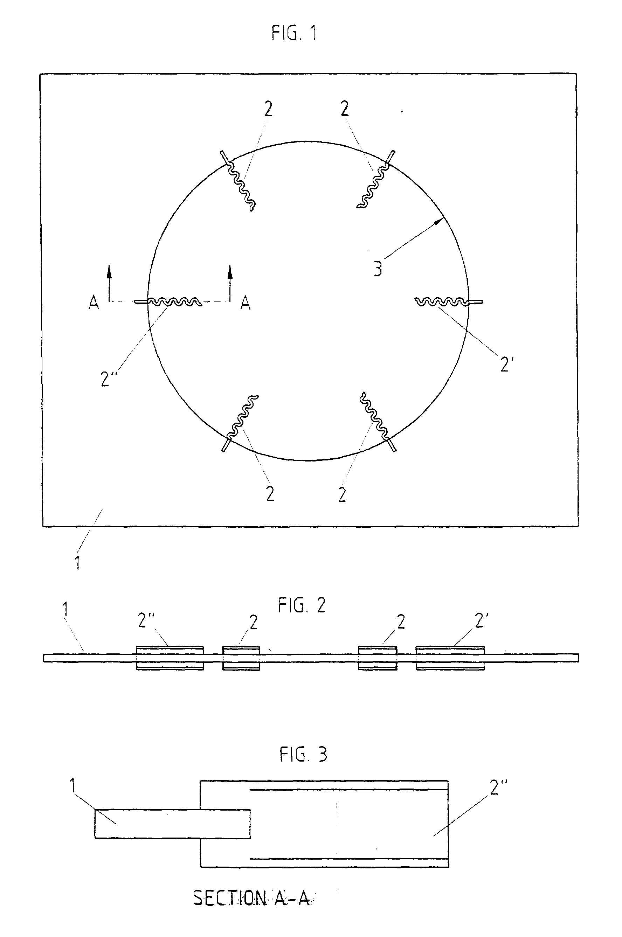

Figs. 1, 2 and 3 diagrammatically show an example of a holding member to be applied to an arrangement for peeling potatoes and similar produce. The holding member shown by way of example comprises a carrier plate 1 to which are attached for example six holder blades 2. It will be obvious that the number of holder blades is to be two or more. The carrier plate can be attached to a mounting plate of a transporter (not shown) in a manner known per se. The carrier plate may be made of metal, such as steel, having a thickness of, for example, 3 mm. The holder blades 2 also made of metal such as steel are attached to the carrier plate by for example welding or brazing. The holder blades may be serrated blades for example formed by a metal strip having a thickness of 2 mm. The serration which is clearly evident in Fig. 1 makes a considerable contribution towards a firm grip on a potato by the holder blades, although only a relatively small part of the holder blades needs to penetrate the potato. However, blades without serration are also satisfactory be it that the firm grip is then slightly less firm. Furthermore, the blades need not of necessity be substantially straight, but may also have a curve, as desired.

Fig. 1 gives a top plan view of the holding member. The holder blades 2 in this embodiment are accommodated in a circular recess 3 of the carrier plate 1. Such a construction is simple and can be made at relatively little cost, contrary to the oval-shaped punching blade from the state of the art discussed above. This Figure shows a preferred embodiment in which the holding member comprises a carrier plate which accommodates six serrated holder blades arranged regular distances apart. Not all the blades need to penetrate the potato then, or not all of them equally far. In the example shown in Fig. 1 especially the holder blades 2' and 2" carry out the most important activity of clamping the potato for a peeling operation to be performed. This regular arrangement with equally long holder blades is advantageous from the point of view of cost price. Added to this is the fact that this embodiment is suitbale for potatoes of different size-categories; the holder blades have a deeper or less deep penetration of the potato depending on the size of the potato. However, it is also possible to have the holder blades arranged in different lengths, so that also a deeper or less deep penetration of the potato of each one of the individual blades may be obtained. The potatoes to be peeled are normally divided into three size categories; a holding member according to the invention may be used for all three categories.

It will be evident that other variants as well may be chosen for a firm grip of a potato. The number of blades, their mutual arrangement, their length and their shape may be subject to many variations without leaving the scope of the invention. The carrier plate 1 of the holding member may also be subject to modifications. For example, the carrier plate may be rendered suitable for being arranged with two or four variations of holder blades for simultaneously picking up two or four potatoes.

An example of the operation of the arrangement according to the invention is represented in a highly diagrammatical manner in Figs. 4 to 17.

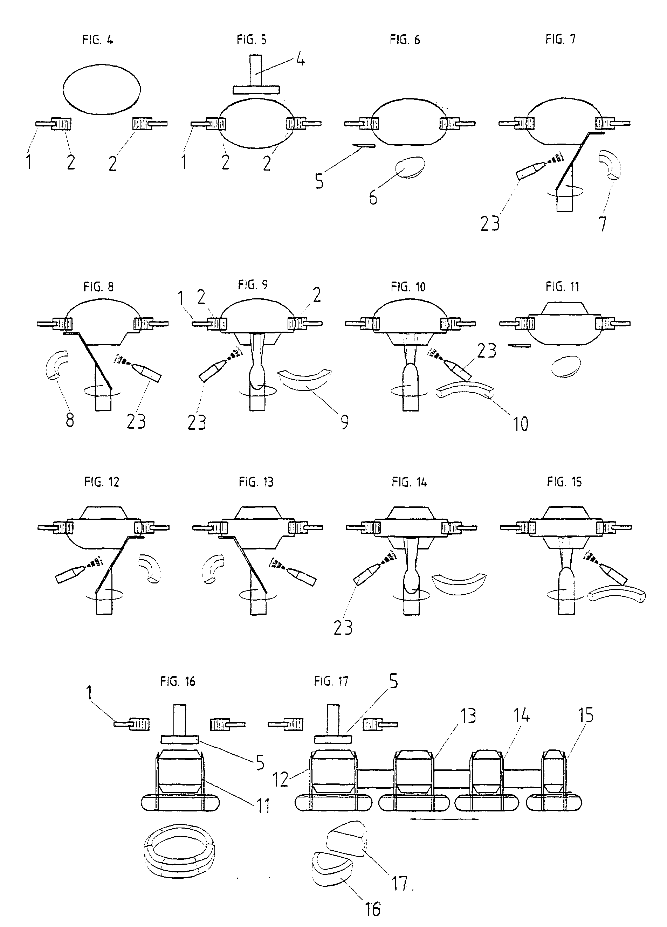

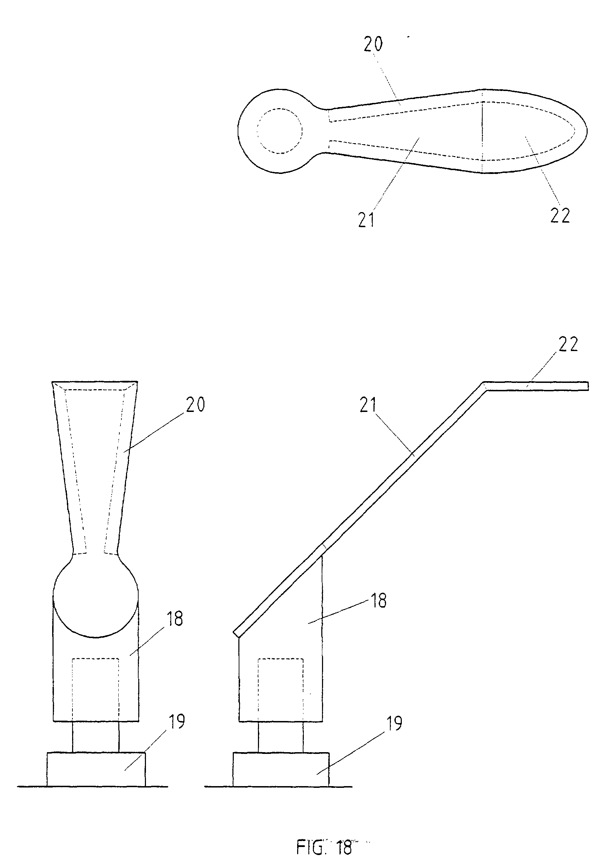

Fig. 4 shows a potato prior to its being pushed in the holder blades 2 of the carrier plate 1 and clamped. In Fig. 5 is shown that a hold-down element 4 pushes the potato into the holder in a clamping manner. Fig. 6 shows that a cutter 5 movable in parallel with the holder 1 cuts a slice off the potato 6. The Figs. 7 and 8 show the cutting away of a skin part 7 and 8 respectively, situated on the two sides, whereas the Figs. 9 and 10 show the cutting away of a skin part 9 and 10 respectively situated at the front and at the back side. The holding member 1 with the potato accommodated therein is now preferably turned through 180° after which the potato may be peeled in similar manner on its other side, as is shown in Figs. 11 to 15. Ultimately, the skin is still to be removed along the holder circumference. This may be effected as shown in Fig. 16, preferably with the aid of a can-shaped blade 11 through which the largely peeled potato is pushed by means of the pushing element. The shape of this blade 11 may be chosen at will; for example, a multi-angle blade appears to be highly satisfactory. The size of the blade 11 defines the part of the potato that is ultimaltely removed. Finally, the potato may desirably also be cut into a number of parts. Depending on the size of a potato, Fig. 17 shows four cutters 12, 13, 14 and 15 which cut the potato in this example into two parts referenced 16 and 17 with cutter 12. The cutter to be selected may be detected in a simple manner by a detection arrangement for detecting the potato size. In each of the processing stations as shown in Figs. 4-17, or in some of them, a liquid spray or liquid atomizer 23 may be installed by which a dosable amount of liquid can be sprayed onto the potato and onto the machine elements in the processing station. This achieves a highly favourable manner of cleaning the arrangement while in operation and prevents the development of bacteria. The little redundant moist which the skins of the potatoes have may then be disposed of in a simple drier and the skins are then directly suitable for cattle fodder.

Fig. 18 shows an embodiment for a peeling arrangement which may be favourably applied to the holding member according to Othe invention. The arrangement includes a holding member 18 which can be rotated by means of a driver 19 shown diagrammatically. Attached to the holding member 18 is a peeling blade 20 which is thus capable of performing a rotating cutting action. The peeling blade presents an inclined part 21 and a part running parallel with the potato carrier plate. This embodiment of the peeling arrangement having a bent in the peeling blade makes it possible to remove the skin from a side of the potato and the part below or above the holder blades 2 in a single operation, which is clearly evident from the Figs. 7-10 and 11-15 shown diagrammatically.

In contrast to the state of the art arrangement defined above, with an oval-shaped punching blade, in which various types of peeling arrangements are applied for peeling different parts of the potato, with the holding member according to the invention it is possible to use a single type of peeling arrangement which includes a blade having a bent as shown in Fig. 18. It will be evident that this is extremely cost effective. Added to this is the fact that the combination of holding member - peeling arrangement as used in the invention contributes to realising a smallest possible peeling loss; this need not be more than 30 per cent.

## Claims

1. An arrangement for the industrial peeling of potatoes and similar produce, comprising at least a holding member for a potato, at least a pushing member for pushing the potato into the holding member and cutting members for removing the skin from various parts of the potato in a plurality of processing stations, characterized in that the potato holding member comprises a carrier plate in an opening of which at least two holder blades for a potato are positioned in distributed fashion, the holding surface being positioned substantially perpendicularly to the surface of the carrier plate, at least at one of the processing stations a liquid spray or liquid atomizer being present with which the potato or parts of the processing stations respectively, may be moistened.

2. An arrangement as claimed in claim 1,
characterized in that the holder blades have serrations in the holding face situated perpendicularly to the carrier plate.

3. An arrangement as claimed in claim 1 or 2,
characterized in that the holder blades extend from the outer edge of the opening towards the centre of the opening.

4. An arrangement as claimed in claim 3,
characterized in that the opening in the carrier plate has the form of a circle and in that the holder blades extending towards the centre of the opening all have an equal longitudinal dimension.

5. An arrangement as claimed in claim 3,
characterized in that the holder blades extending towards the centre of the opening at least partly have a different longitudinal dimension.

6. An arrangement as claimed in claim 4 or 5,
characterized in that six uniformly distributed holder blades are arranged in the opening of the carrier plate.

7. An arrangement as claimed in one of the claims 1 to 6, characterized in that the holder blades have a substantially straight shape in longitudinal direction.

8. An arrangement as claimed in one of the claims 1 to 6, characterized in that the holder blades have a curved shape in longitudinal direction.

9. An arrangement as claimed in one of the preceding claims, characterized in that at least a rotary peeling arrangement is present whose peeling blade has a part installed at an inclination relative to the carrier plate and a part running substantially parallel with the carrier plate, the latter part removing the skin above or below the holder blades.

10. An arrangement as claimed in one of the preceding claims, characterized in that a can-shaped peeling blade, preferably multi-angle, tubular peeling blade, is present for removing the potato skin part held by the holder blades and situated in the face of the carrier plate, the potato being pushed through this can-shaped peeling blade.

11. An arrangement as claimed in claim 10,
characterized in that the can-shaped peeling blade has on its interior one or more cutters for dividing the potato into parts of desired shape.

12. A holding member to be utilized in a peeling arrangement for potatoes and similar produce, characterized in that the holding member presents a carrier plate in an opening of which at least two and preferably six distributed holder blades for a potato are arranged, the holder blades preferably having serrations in the holding surface positioned perpendicularly to the carrier plate.

## Patentansprüche

1. Einrichtung zum industriellen Schälen von Kartoffeln und ähnlichen Produkten mit wenigstens einem Halteelement für eine Kartoffel, mit wenigstens einem Andrückelement zum Andrücken der Kartoffel in das Halteelement und mit Schneidelementen zum Entfernen der Schale von den jeweiligen Teilen der Kartoffel in einer Vielzahl von Verarbeitungsstationen, dadurch gekennzeichnet, dass das Halteelement eine Trägerplatte aufweist, wobei in einer Öffnung derselben wenigstens zwei Haltemesser für eine Kartoffel vorgesehen sind, und zwar in der Trägerplatte verteilt, wobei sich die Ebene der Haltefläche im Wesentlichen senkrecht zu der Ebene der Trägerplatte erstreckt, wobei wenigstens in einer der Verarbeitungsstationen eine Einrichtung zum Sprühen bzw. Zerstäuben von Flüssigkeit vorgesehen ist, womit die Kartoffel bzw. Teile der Verarbeitungsstationen befeuchtet werden können.

2. Einrichtung nach Anspruch 1, dadurch gekennzeichnet, dass die Haltemesser in der senkrecht auf der Trägerplatte stehenden Ebene der Haltefläche mit einem Wellenschliff versehen sind.

3. Einrichtung nach Anspruch 1 oder 2, dadurch gekennzeichnet, dass die Haltemesser sich von dem Rand der Öffnung zur Mitte derselben hin erstrecken.

4. Einrichtung nach Anspruch 3, dadurch gekennzeichnet, dass die Öffnung in der Trägerplatte die Form einer Kreises hat und dass die sich zur Mitte der Öffnung hin erstreckenden Haltemesser alle die gleiche Länge haben.

5. Einrichtung nach Anspruch 3, dadurch gekennzeichnet, dass die sich zur Mitte der Öffnung erstreckenden Haltemesser wenigstens zum Teil eine verschiedene Länge haben.

6. Einrichtung nach Anspruch 4 oder 5, dadurch gekennzeichnet, dass sechs einheitlich verteilte Haltemesser in der Öffnung der Trägerplatte vorgesehen sind.

7. Einrichtung nach einem der Ansprüche 1 bis 6, dadurch gekennzeichnet, dass die Haltemesser eine in der Längsrichtung im Wesentlichen gerade Form haben.

8. Einrichtung nach einem der Ansprüche 1 bis 6, dadurch gekennzeichnet, dass die Haltemesser eine in der Längsrichtung gekrümmte Form haben.

9. Einrichtung nach einem der vorstehenden Ansprüche, dadurch gekennzeichnet, dass wenigstens eine rotierbar angeordnete Schälvorrichtung vorgesehen ist, deren Schälmesser einen gegenüber der Trägerplatte schräg angeordneten Teil, sowie einen im Wesentlichen sich parallel zu der Trägerplatte erstreckenden Teil aufweist, wobei dieser letztere Teil die Schale über und unter den Haltemessern entfernt.

10. Einrichtung nach einem der vorstehenden Ansprüche, dadurch gekennzeichnet, dass es ein büchsenförmiges Schälmesser gibt, vorzugsweise vieleckig, rohrförmig, zum Entfernen des von den Haltemessern in der Ebene der Trägerplatte liegenden Schalenteils, wobei die Kartoffel durch dieses büchsenförmige Schälmesser hindurch gedrückt wird.

11. Einrichtung nach Anspruch 10, dadurch gekennzeichnet, dass das büchsenformige Schälmesser innerlich mit einem oder mehreren Messern versehen ist zum Aufteilen der Kartoffel in eine Anzahl Stück einer gewünschten Form.

12. Halteelement zum Einsatz bei einer Einrichtung zum Schälen von Kartoffeln und dergleichen, dadurch gekennzeichnet, dass dieses Element in einer Öffnung eine Trägerplatte aufweist, in der wenigstens zwei und vorzugsweise sechs verteilt angeordnete Haltemesser für eine Kartoffel vorgesehen sind, wobei diese Haltemesser vorzugsweise mit einem Wellenschliff in der sich senkrecht zu der Ebene der Trägerplatte erstreckenden Ebene der Haltefläche versehen sind.

## Revendications

1. Dispositif pour l'épluchage de pommes de terre et de produits similaires, comportant au moins un organe de retenue pour une pomme de terre, au moins un élément de pression permettant de presser la pomme de terre dans l'organe de retenue et des organes de coupe permettant de débarrasser, dans un nombre déterminé de stations de traitement, les différentes parties de la pomme de terre de leurs épluchures, caractérisé en ce que l'organe de retenue pour les pommes de terre est muni d'une plaque de support et d'au moins deux couteaux de préhension qui sont disposés de façon répartie dans la plaque de support et dont la face de préhension est essentiellement perpendiculaire par rapport à la face de la plaque de support, alors qu'un pulvérisateur de liquide, respectivement un vaporisateur de liquide, est présent à au moins l'une des stations de traitement et permet d'humidifier la pomme de terre respectivement les parties des stations de traitement.

2. Dispositif selon la revendication 1, caractérisé en ce que les couteaux de préhension sont munis de crénelures réalisées dans la face de préhension qui se situe de façon perpendiculaire par rapport à la plaque de support.

3. Dispositif selon la revendication 1 ou 2, caractérisé en ce qu'une ouverture est ménagée dans la plaque de support et que les couteaux de préhension s'étendent à partir du bord de l'ouverture vers l'intérieur de l'ouverture.

4. Dispositif selon la revendication 3, caractérisé en ce que l'ouverture ménagée dans la plaque de support est sous forme d'un cercle et que les couteaux de préhension s'étendant vers l'intérieur de l'ouverture présentent tous la même dimension longitudinale

5. Dispositif selon la revendication 3, caractérisé en ce que les couteaux de préhension s'étendant vers l'intérieur de l'ouverture présentent au moins partiellement une dimension longitudinale différente.

6. Dispositif selon la revendication 4 ou 5, caractérisé en ce que dans l'ouverture ménagée dans la plaque de support sont disposés six couteaux de préhension régulièrement répartis.

7. Dispositif selon l'une des revendications 1 à 6, caractérisé en ce que dans la direction longitudinale, les couteaux de préhension présentent une forme essentiellement droite

8. Dispositif selon l'une des revendications 1 à 6, caractérisé en ce que dans la direction longitudinale, les couteaux de préhension présentent une forme courbée.

9. Dispositif selon l'une des revendications précédentes, caractérisé par la présence d'au moins un dispositif d'épluchage qui est disposé de façon rotative et dont le couteau-éplucheur présente une partie disposée de façon inclinée par rapport à la plaque de support, ainsi qu'une partie disposée de façon essentiellement parallèle par rapport à la plaque de support, laquelle dernière partie enlève l'épluchure présente respectivement au-dessus et au-dessous des couteaux de préhension.

10. Dispositif selon l'une des revendications précédentes, caractérisé par la présence d'un couteau-éplucheur tubulaire, de préférence polygonal, tubulaire, servant à l'enlèvement de la partie de l'épluchure retenue par les couteaux de préhension et située dans le plan de la plaque de support, opération lors de laquelle la pomme de terre est poussée à travers ce couteau-éplucheur tubulaire.

11. Dispositif selon la revendication 10, caractérisé en ce que le couteau-éplucheur tubulaire est muni, à l'intérieur, d'un ou de plusieurs couteaux servant à diviser la pomme de terre en parties présentant la forme désirée

12. Organe de retenue à appliquer à un dispositif pour l'épluchage de pommes de terre et de produits similaires, caractérisé en ce qu'il présente une plaque de support dans une ouverture de laquelle sont présents au moins deux et de préférence six couteaux de préhension disposés de façon répartie pour une pomme de terre, lesquels couteaux de préhension sont munis de préférence de crénelures prévues dans la face de préhension située de façon perpendiculaire par rapport à la plaque de support.
